Europäisches Patentamt

European Patent Office

Office européen des brevets

(11) Publication number: **0 254 141**
**A2**

# (12) EUROPEAN PATENT APPLICATION

(21) Application number: **87109885.1**

(22) Date of filing: **08.07.87**

(51) Int. Cl.⁴: **G01L 19/08**

(30) Priority: **24.07.86 IT 2124686**

(43) Date of publication of application:
**27.01.88 Bulletin 88/04**

(84) Designated Contracting States:
**CH DE ES FR GB LI**

(71) Applicant: NICOTRA SISTEMI S.p.A.
Via Vincenzo Monti, 23
I-20016 Pero (Milan)(IT)

(72) Inventor: **Monterosso, Gianpaolo**
**Via Alghero 11**
**I-20128 Milan(IT)**
Inventor: **Marazzi, Riccardo**
**Via Delle Acacie 7**
**I-20069 Vaprio D'Adda (Milan)(IT)**
Inventor: **Nicotra, Mario**
**Residenza Trefili-Milano 2**
**I-20090 Segrate (Milan)(IT)**
Inventor: **Manenti, Luciano**
**Via Kennedy 22**
**I-25064 Gussago (Brescia)(IT)**

(74) Representative: **Patentanwälte Dipl.-Ing. Klaus**
**Behn Dipl.-Phys. Robert Münzhuber**
**Rumfordstrasse 10**
**D-8000 München 5(DE)**

(54) **Multiple transducer for measuring pressure in gas filled cables.**

(57) The multiple pressure transducer comprises a multiplexer (2) for the selection of pressure sensors (S0, S1, S2, S3, S4...) by decoding a sensor address, thereby permitting a single power supply (5), a single counter (4) and a single clock generator (3) to be employed, in order to enable and transmit the measurements of a plurality of pressure sensors connected to a plurality of gas-filled cables.

EP 0 254 141 A2

## "MULTIPLE TRANSDUCER FOR MEASURING PRESSURE IN GAS-FILLED CABLES"

This invention generally relates to devices for measuring the pressure within gas-filled cables, especially used for data transmission through lines and more particularly a multiple pressure transducer capable of measuring the pressure level in a plurality of adjacent gas-filled cables.

The cable pressurizing technique is already known and widespread by the telephonic Companies and consists of admitting gas-filled and dehydrated air within the telephonic cables. This techinque has the purpose of maintaining the insulation resistance along the copper conductors high, by preventing the outer moisture from entering the cable. Further, the pneumatic phenomena correlated to and resulting from possible air leakage from the cable are used to prevent the moisture from entering the cable, which is often due to the greater outer pressure, and to locate the place of these leakages.

The advantages resulting from the use of this technique are numberless, of which some are already known and some are to be discovered or demonstrated. The equipment and the devices used to attain the above objectives are evolving and improving to make the application of these methods more and more actractive both from the standpoint of the technical performances and from the standpoint of the costs.

The improvement in the performances is obtained by the use of the electronic techniques integrated by an effective system architecture and by a center software devised for taking the maximal advantage of the measurements and the survey made by the equipment or devices installed in the field.

The optimization and the reduction of costs, especially of the labour for installing these systems are important factors for a quick and effective diffusion thereof.

For measuring the pressure within gas-filled cables pressure transducers are normally used which convert pressure to a measurable electric signal.

At present it is known the use of electronic pressure transducers which make use of a pair of wires belonging to the same gas-filled cable the pressure of which is to be measured for transmitting to a remote location a signal having a frequency proportional to the pressure measured by the transducer.

Such transducer uses as basic components a sensor and a timer.

Such systems use a plurality of pressure transducers arranged along the gas-filled cable, in predetermined measuring locations. Each pressure transducer is provided with one own timer allowing the signal transmission for a limited time and in a predetemined time sequence so as to permit the pressure transducers to transmit one at a time their signal according to this sequence. Of course, these signals are supplied to a center unit which is capable of indicating for each of the received electric signals the associated pressure transducer in the same order as they are received and is adapted to supply simultaneously through the transmission line all the pressure transducers.

The present invention aims at providing a pressure transducer capable of controlling a plurality of sensors and therefore of providing an important cost reduction for each pressure measurement, of offering a substantial reduction of the installation costs and of reducing the operating costs in carrying out the pressure measurements in the desired locations along the gas-filled cable.

More particularly, the multiple pressure transducer according to the present invention is characterized in that it comprises:

-a plurality of pressure sensors,

-a multiplexer adapted to enable and select the sensor corresponding to a coded address applied to an appropriate input thereof,

-a clock generator,

-a counting and timing circuit forming the address to be applied to the multiplexer,

-a power supply for delivering the operating voltage to the circuit components, and

-a line for delivering and returning the signal supplied by the sensors, said signal having a frequency which is proportional to the pressure.

By means of this system a single pair of wires can be used for transmitting measurements obtained in different pressure detecting locations of other gas-filled cables laid down in the neighbourhood so that there is no longer the necessity of having transducers in the same number as the gas-filled cables and timers in the same number as the transducers, thereby obtaining an important saving both as to the components and the operation thereof.

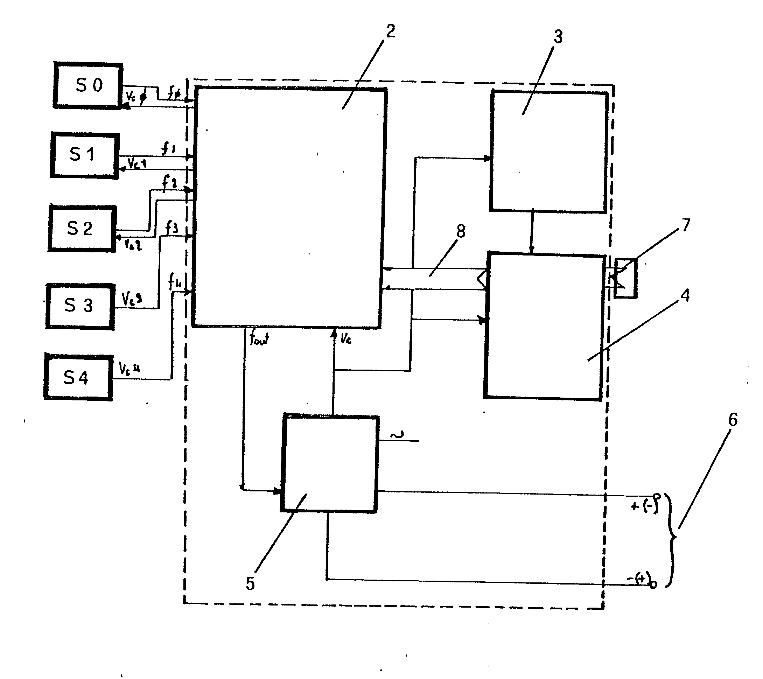

The present invention will be now described in more detail in connection to the accompanying drawing, the single Figure of which illustrates by way of a non limitative example a block diagram of a multiple transducer according to the invention.

Referring now to the drawing, the multiple pressure transducer comprises a plurality of sensors S0,S1,S2,S3 and S4 connected to a multiplexer 2 which is energized by a stabilized power supply 5, in turn supplied with power through the line 6, a clock generator 3 and an address generator. The address generator 4 is connected to the multiplexer 2 and to a device 7 for programming the address code by the operator or installer.

The sensor is designed so as to generate at its output a signal of a frequency which is proportional to the pressure in accordance with a well known technique, as for example:
-the integrated circuit of NATIONAL SEMICONDUCTOR LM 555 and its equivalents applied as voltage-to-frequency converter (VCO) which permits the conversion of the voltage to frequency;
-the VCO circuit disclosed in "Application Note 81" AN81-3 issued in June 1973 described in "LINEAR APPLICATION HANDBOOK" of the National Semiconductor.

The voltage-to-frequency converter circuit permits to have as an output a frequency signal which is proportional to the voltage applied to the input and which is generated by the flow of electric current through resistors connected to each other in a "divider" or "bridge" configuration.

Should a suitable resistor change its resistence, a voltage change thereacross will occur.

This voltage, when applied to the VCO circuit, allows a signal to be measured, the frequency of which is proportional to the electric resistance change.

The piezoresistive and extensometric pressure sensors nowaday in commerce have the characteristic to change their resistive value in a manner proportional to the force and therefore the pressure applied on their surface.

By using known components an electronic pressure transducer having a frequency output has been provided.

The electronic multiplexing and counting circuit is provided by a normal counter chain.

This circuit has been devised in order to meet different requirements, namely
-to permit the output of a frequence signal in a predeterminated time programmed by the operator by means of a set of connections made by "bridges" and/or "switches" or through other techniques. This operation consists in assigning to each multiple transducer a coded address;
-to permit the output of the signals of all sensors connected to the input from the multiple transducer one at the time.

This function is obtained by applying a multiplexer driven by the counting circuit which generates one at the time the addressing signals in the code of the relevant sensor connected to the multiple transducer.

A code is therefore assigned to each sensor when it is electrically connected to the multiple transducer; such a code is generated by the counting and multiplexing circuit to allow the energization of the sensor and the output of the signal proportional to the pressure.

The sensors are therefore enabled by a code from the counting circuit.

An internal timer permits the duration of the frequency signal to be determined.

The operation of the multiple pressure transducer is as follows.

When on the line 6 the operating voltage is applied, the power supply 5 provides the necessary operating voltage to the clock generator 3, the address generator 4 and the multiplexer 2.

The clock generator 3 starts to deliver to the address generator 4 a pulse chain having a stable and precise frequency. By employing this frequency the address generator 4 makes a count which generates a different code for each pulse.

When the generated code is the same as the code programmed by the operator or installer through the programming device 7, the address generator 4 generates on the output 8 the coded address corresponding to the first sensor.

This address is decoded by the multiplexer 2 which diverts to the selected sensor the voltage from the power supply 5 and also diverts the signal Fo generated by the sensor through the power supply 5 and to the signal output line 6.

In this case the power supply 5 simultaneusly acts as a power ciruit for the sensor signal.

After a short predetermined time is elapsed a timer located in the address generator 4 interrupts the signal output and then the address generator 4 generates the coded address corresponding to the following sensor.

This procedure will be repeated as many times as the sensors connected to the multiplexer 2 are.

The purpose of sensor 1 is to convert the measured pressure to a quantity proportional to the pressure, in this case the frequency.

As can be seen, the pressure transducer comprises:
-a multiplexer which enables and selects the sensor corresponding to the coded address presented at a suitable input thereof;
-a clock generator for the counting chain;
-a counting and timing circuit which generates the address to be supplied to the multiplexer for selecting one of the externally connected sensors;
-a power supply for delivering the supply voltage to the remaining components of the circuit; and

-the line on which the power is supplied and the signal proportional to the pressure is generated by the sensors.

By arranging a multiple transducer according to the invention in each of the chambers or wells intended to receive it also the pressures of the other adjacent gas-filled cables can be measured so that in a single measuring location, a single transducer can measure the pressure of more than one gas-filled cables which run through the same location and these pressure values can be supplied to the control station in sequence by means of the multiplexer. The advantages provided by the multiple pressure transducer according to this invention with respect to the single pressure transducers nowaday available in commerce are the following:

1) Cost reductions for each pressure measurement because the costs of the common components are divided by the number of used measurement locations.

2) Substantial cost savings in the multiple pressure transducer installation because it is sufficient to make a single electric connection to a service loop of a gas-filled cable for transmitting relative measurements to different pressure detecting locations of other gas-filled cables running in the neighbourhood. The connection between the different gas-filled cables and the multiple pressure transducer can be pneumatic only if the sensors are installed in the same housing as the multiple pressure transducer. The connection can be electric only if the sensors are installed on the associated cables.

3) Operating cost reduction of the multiple pressure transducers because a single loop is employed and therefore loops of other cables are free and can be used for other purposes, such as for subscriber lines or for electric tests.

The multiple pressure transducer is usually used in the chambers or in the wells and in all locations where a plurality of gas-filled telefonic cables are laid down and it permits a single loop to be used for transmitting the signals and supplying the power and the pressure measurement to be made by a pneumatic connection for each cable, which can be readily made by the installer without opening the gas-filled cable.

## Claims

1) A multiple pressure transducer for measuring the pressure within a plurality of gas-filled telephonic cables, characterized in that it comprises:
-a plurality of pressure sensors,
-a multiplexer adapted to enable and select the sensor corresponding to a coded address provided at a suitable input thereof,
-a clock generator,
-a counting and timing circuit which generates the address to be applied to the multiplexer,
-an own power supply for applying the operating voltage to the circuit components, and
-a line for delivering and returning a signal proportional to the pressure detected by the sensors, each of said sensors generating a signal having a frequency proportional to the pressure.

2) A multiple pressure transducer as claimed in claim 1, characterized in that it further comprises a coded address generating circuit which once it is programmed by the operator or installer, generates the addresses of the sensors to be enabled.

S 0

S 1

S 2

S 3

S 4

2

3

8

7

4

6

5

$V_c$

$f\emptyset$

$f1$

$V_{c1}$

$f2$

$f3$

$V_{c2}$

$V_c3$

$f4$

$V_c4$

$f_{out}$

$V_c$

$+(-)$

$-(+)$

0 254 141